# EUROPÄISCHE PATENTSCHRIFT

(11) **EP 0 525 690 B1**
(45) Veröffentlichungstag und Bekanntmachung des Hinweises auf die Patenterteilung: **09.04.1997**
(21) Anmeldenummer: 92112757.7
(22) Anmeldetag: 25.07.1992
(51) Int. Cl.: E04B 2/96, E06B 3/54

(54) **Element für eine Glaskonstruktion und Glaskonstruktion**
Element for a glass construction and glass construction
Elément pour une construction en verre et construction en verre

(30) Priorität: 30.07.1991 DE 4125182
(43) Veröffentlichungstag der Anmeldung: 03.02.1993
(73) Patentinhaber: BGT Bischoff Glastechnik GmbH & Co. KG, D-75015 Bretten (DE)
(72) Erfinder: Bischoff, G. K.E., Dipl.-Kfm., W-7518 Bretten (DE); Beyle, Peter, Dipl.-Ing., W-7518 Bretten (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 250 989
- EP-A- 0 320 674
- DE-A- 3 710 478
- DE-U- 8 704 683
- DE-U- 8 714 057
- FR-A- 2 642 465

## Beschreibung

Die Erfindung betrifft ein Element für eine Glaskonstruktion nach dem Oberbegriff des Anspruchs 1 sowie eine Glaskonstruktion nach dem Oberbegriff des Anspruchs 9.

Die Abdeckung von Gebäudekonstruktionen durch rahmenloses Glas und damit die Herstellung von Glasfassadenkonstruktionen, wie Glasfassaden und -Dächer, setzt sich in größerem Maße durch.

Dabei sollen rahmenlose Glaseinheiten, seien es Einfachscheiben, Verbundscheiben oder Isolierglasscheiben, auf vorgesehenen Tragschienen aufgesetzt und in geeigneter Weise an der Unterkonstruktion gehalten werden. Es wurde hierbei schon vorgeschlagen, eine größere Glasscheibe mit einem Absatz zu versehen, an dem dann im wesentlichen T-förmige Halteelemente angreifen können, um die Glasscheibeneinheit zu halten. In gleicher Weise wurde auch schon vorgeschlagen, stirnseitig in Glasplatten Nuten vorzusehen, in die Halteelemente ebenfalls eingreifen können. Schließlich wurde bei Verbundglasscheiben vorgeschlagen, in einer der Einzelscheiben der Verbundglasscheiben einen Durchbruch einzubringen, durch den der Gewindeteil eines Schraubbolzens hindurchragt, dessen Kopf zwischen beiden Einzelscheiben des Glasverbundes eingelegt ist und die mit dem Durchbruch versehene hintergreift. Sämtliche Vorschläge sind fertigungstechnisch äußerst aufwendig und weisen auch sonstige Nachteile auf. Bei den beiden ersten Vorschlägen müssen nachträglich an der Glasscheibe durch spanendes Abarbeiten, wie Abschleifen etc., die Absätze bzw. Nuten eingebracht werden. Beim letztgenannten Vorschlag muß die innenliegende Einzelscheibe durch Bohren bearbeitet werden. Soweit eine Isolierglaskonstruktion vorgesehen ist, so muß die innenliegende Einzelscheibe der Einheit gegenüber den Erstreckungen der äußeren, die Schraube tragenden Verbundglasscheibe zurückversetzt sein. Dies erfordert eine aufwendige und komplizierte Herstellung, da mit unterschiedlichen Scheibenabmessungen gearbeitet werden muß.

Aus der EP-A-320 674 ist eine Verbundglasscheibe bekannt, die mittels Klebverbindungen um den Randbereich an einer Haltekonstruktion aus Haltestäben festgeklebt werden soll. Zur zusätzlichen Sicherung bei einem Versagen der Klebverbindungen ist in die die Einzelscheiben der Verbundglasscheiben verbindende Schicht ein flexibler Lappen aus Draht-Gewebe oder -Geflecht eingelegt, der die Verbundglasscheibe an ihrer Stirnseite überragt. Der Haltestab weist eine Bohrung auf. Der flexible Lappen ist um die Stirnseiten der dem Haltestab zugewandten Einzelscheibe der Verklebung und des Haltestabes auf die der Verbundglasscheibe abgewandte Seite des Haltestabes umgelegt und weist in seinem Randbereich einen mit der Bohrung des Haltestabes fluchtenden Durchbruch auf, so daß durch diese eine Schraube hindurchgesteckt und in der Bohrung des Haltestabes zum Festspannen des flexiblen Lappens eingeschraubt werden kann. Nachteilig ist hier zunächst, daß die Verbundglasscheibe mit den Haltestäben zunächst durch Verklebungen verbunden ist. Lösen sich diese Verklebungen, so mag zwar der flexible Lappen die Verbundglasscheibe daran hindern herunterzufallen, aufgrund seiner Flexibilität wird sie sich aber auf jeden Fall leicht absenken und nicht ihre ursprüngliche Position behalten. Auch Zug- oder Scher- bzw. Schubkräften wird der flexible Lappen nachgeben, so daß die Verbundglaseinheit keine statischen und erst recht keine konstruktiven Aufgaben übernehmen kann. Die Konstruktion aus Haltestäben müßte an sich statisch völlig steif sein. Da dies bei einer solchen, nicht ausgefachten Gitterkonstruktion nicht zu erreichen ist, besteht sogar die erhöhte Gefahr, daß aufgrund von Relativbewegungen zwischen der Gitterkonstruktion aus den Haltestäben sowie der mit diesen und vor diesen verklebten Scheiben bedingten Bewegungen sich die Verklebungen leicht lösen. Eine zuverlässige dauerhafte Glasfassade mit der erforderlichen Dichtigkeit ist durch den Gegenstand dieser Veröffentlichung nicht erzielbar. Die Verbundglaselemente können keinerlei statische und erst recht keine konstruktiven Aufgaben übernehmen.

Bei einem Element für eine Glaskonstruktion nach der DE 37 10 478 Al sind zwischen zwei ein Verbundsicherheitsglas bildenden Scheiben erste Enden von zug- und biegefesten Laschen eingelegt. Die Laschen weisen von den Enden zumindest senkrecht abgebogene Bereiche auf, die unmittelbar an der Stirnseite einer inneren Scheibe der Verbundsicherheitsglaseinheit und ggf. einer durch Profilleisten und Dichtungen sowie einer durch diese auf Abstand gehaltenen weiteren Scheibe gebildeten Isolierglaseinheit anliegen.

Nachteilig ist, daß die Laschen und insbesondere ihre Enden lediglich kraftschlüssig in der organischen Verbindungsschicht zwischen den Einzelscheiben des Verbundsicherheitsglases eingelagert sind; hierdurch kann unter einwirkenden Kräften, wie es beispielsweise Wind und Sturm sind, ein Lockern der Laschen in der Verbundglaseinheit erfolgen, so daß hierdurch Gefährdungen bedingt sind, zumindest wenn keine weiteren Verbindungs- und Sicherheitsmaßnahmen, insbesondere formschlüssige Verbindungen vorgesehen sind, wie dies im Einzelfall bei den Ausgestaltungen des Standes der Technik durch weitere hier nicht im einzelnen interessierende, durchaus aber aufwendige konstruktive Maßnahmen erreichbar sein mag.

Die FR 2 642 465 A1 zeigt ebenfalls Elemente für eine Glaskonstruktion, wobei Tragmittel entweder in Form von Rahmen oder Agraffen in den Zwischenraum zweier eine Verbundglasscheibe bildenden Einzelscheiben eingreifen, wobei die Tragmittel ebenfalls weitgehend im Schnitt U-förmig ausgebildet sind und mit dem dem zwischen die Scheiben eingreifenden, abgebogenen Schenkel abgewandten Schenkel an einer Tragkonstruktion festgelegt sind. Die Tragmittel weisen dabei stirnseitig an der äußeren Einzelscheibe der Verbundglasscheibe anliegende Anschläge oder Schenkel auf; diese mögen zusätzliche Konstruktionsmittel darstellen, mittels derer zumindestens die Bewegung der Tragmittel gegen die Scheiben begrenzt wird, so daß hierdurch ein Lockern und damit Gefahren vermieden werden mögen; dies stellt aber wiederum eine konstruktiv aufwendige Ausgestaltung dar.

Der Erfindung liegt die Aufgabe zugrunde, ein Element für eine Glaskonstruktion sowie eine Glaskonstruktion mit einem solchen Element zu schaffen, bei der eine einfachere und weniger aufwendige Befestigung des Elementes an einer Tragkonstruktion möglich ist, dennoch aber ein hoher Sicherheitsstandard erreicht wird.

Erfindungsgemäß wird die genannte Aufgabe durch ein Element für eine Glaskonstruktion der gattungsgemäßen Art mit den kennzeichnenden Merkmalen des Anspruchs 1 sowie durch eine Glaskonstruktion nach dem Anspruch 9 gelöst.

Die organische Verbindungsschicht, die zur Verbindung der Einzelglasscheiben zur Verbundscheibe unter Erhitzung und gegebenenfalls Druck dient, geht eine Formschlußverbindung durch die Durchbrüche der Halteelemente mit diesen ein; eine gesonderte Ausbildung der Scheiben selbst zur Herstellung einer Formschlußverbindung zwischen dem Halteelement und diesen erübrigt sich daher.

Die Halteelemente können aus verschiedenen Materialien bestehen und verschiedene Ausgestaltungen aufweisen. So können die Halteelemente aus Metall bestehen, wobei vorzugsweise als Material Edelstahl verwendet wird. Ein äußerst einfaches, aber dennoch zuverlässiges Verbindungselement besteht aus Flachmaterial, gegebenenfalls gelochtem Flachmaterial, wie eben aus Lochblech. Es kann aber auch vorgesehen sein, daß lediglich der zwischen den Einzelscheiben in der organischen Zwischenschicht einzulagernde Bereich der Halteelemente aus Flachmaterial besteht, ihr an der Stirnseite aus der Verbundplatteneinheit herausragender Teil aber schon in der gewünschten Weise zu einem Befestigungselement geformt ist, beispielsweise Hakenform aufweist, aus Rundmaterial besteht oder dergleichen.

Während in einfachster Ausgestaltung das erfindungsgemäße Element eine Zweischeibenverbundscheibe mit den erfindungsgemäß eingelagerten Halteelementen ist, kann auch eine Mehrfachverbundscheibe vorgesehen sein. Darüber hinaus sieht eine äußerst bevorzugte Ausgestaltung vor, daß es einen Isolierglasscheibenaufbau aufweist, wobei weiterhin die Halteelemente in nach außen zu richtenden Verbundglasscheiben der Isolierglaskonstruktion eingelagert sind.

Bevorzugte Ausgestaltungen der Erfindung sehen vor, daß die Trägerelemente Profilträger sind oder daß die Trägerelemente Verbundglasträger sind. Eine weitere vorteilhafte Ausgestaltung zeichnet sich dadurch aus, daß die Endabschnitte der Halteelemente einen seitlichen Versatz zu ihrer Austrittsstelle aus der Verbundglasscheibe aufweisen, die im wesentlichen im Abstand der Austrittsstelle zu der den Trägerelementen zugewandten Seitenfläche der Verbundglasscheiben entspricht. In weiterer Ausbildung der erfindungsgemäßen Glaskonstruktion ist vorgesehen, daß zwischen dem Rand der Verbundglaseinheit und dem Trägerelement ein Dichtungsband angeordnet ist und das Verbundglaselement und das Trägerelement unter Zwischenlage des Dichtungsbandes durch die Halteelemente gegeneinander verspannt sind sowie die Halteelemente mit Abstand zur Stirnseite des Verbundglaselements senkrecht zu dieser abgewinkelt sind. Wenn vorgesehen ist, daß die Verbundglasscheiben über ihre Halteelemente mittels Schrauben am Trägerelement befestigt sind und insbesondere daß die Schrauben selbstschneidende Schrauben sind, so kann das elastische Dichtungsband lediglich zwischen Glaselement und Tragelement eingelegt sind. In bevorzugter Ausgestaltung kann aber darüber hinaus vorgesehen sein, daß die Verbundglasscheiben an ihren Randbereichen mit dem Trägerelement verklebt sind, weniger um hierdurch die Festlegung der Verbundelemente zu erreichen, als vielmehr um eine hinreichende Dichtigkeit sicherzustellen.

Weitere Vorteile und Merkmale der Erfindung ergeben sich aus den Ansprüchen und aus der nachfolgenden Beschreibung, in der ein Ausführungsbeispiel des erfindungsgemäßen Elements für eine Glasfassade unter Bezugnahme auf die Zeichnung im einzelnen erläutert ist. Dabei zeigt bzw. zeigen:

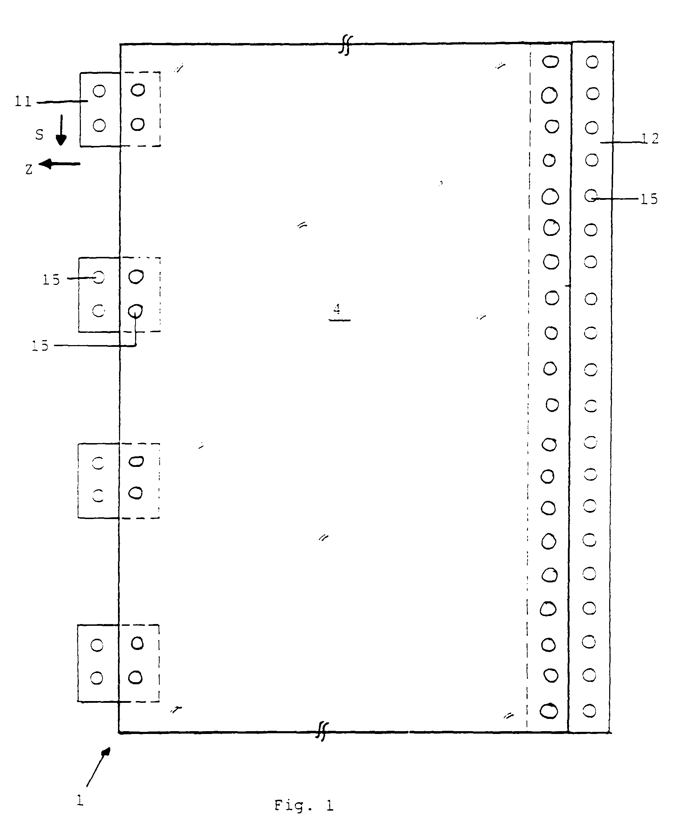

- Figur 1: zwei bevorzugte Ausgestaltungen erfindungsgemäß ausgebildeter Elemente für Glasfassaden (rechts und links in der Figur) mit Halteelementen in Form von einerseits Haltelaschen und andererseits einem Haltelochband, die in der Darstellung der Figur 1 noch nicht zu ihrer brauchsstellung um 90° nach hinten abgebogen sind;
- Figur 2: einen Schnitt durch bevorzugte Ausgestaltungen des erfindungsgemäßen Elements für eine fassade mit unterschiedlichem Scheibenaufbau (ebenfalls jeweils rechts und links in der Figur)
- Figur 3: eine ausschnittweise Darstellung einer mit den erfindungsgemäßen Glaselementen erstellten erfindungsgemäßen Glaskonstruktion in Form einer Glasfassade;
- Figur 4: eine Darstellung zur Festlegung der erfindungsgemäßen Glaselemente an einem Profilträger (Pfosten bzw. Riegel der Glasfassade);
- Figur 5: eine Darstellung entsprechend der der Figur 4 zusätzlich mit einer Abdeckleiste auf der Außenseite;
- Figur 6: eine erfindungsgemäße Konstruktion für eine Dachverglasung;
- Fig. 7 + 8: eine weitere erfindungsgemäße Glaskonstruktion mit erfindungsgemäßen Glaselementen in Form von Glasträgern in Seitenansicht (Figur 7) und in Draufsicht;
- Fig. 9 + 10: eine erfindungsgemäße Konstruktion zur Verbindung eines Glasträgersmit Abdeckplatten, die aus Glas oder aus Blech bestehen können.

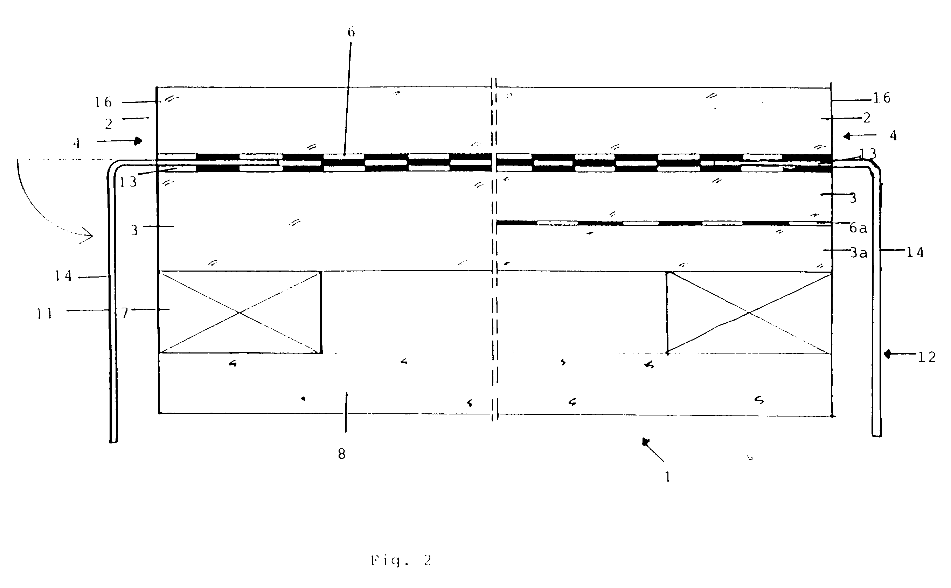

Das erfindungsgemäße Element 1 der Glasfassade, wie sie auch unter der Bezeichnung Structural Glazing bekannt ist, weist zumindestens eine aus mindestens zwei Einzelscheiben 2, 3 bzw. 2, 3, 3a bestehende Verbundglasscheibe 4 auf, bei der die Einzelscheiben 2, 3 bzw. 2, 3, 3a durch hochelastische organische Verbindungsschichten 6, 6a miteinander verbunden sind. Die Verbindungsschichten weisen Stärken von üblicherweise 0,3 bis 0,8 mm auf und bestehen beispielsweise aus Zelluloseacetat, Polymerisaten von Acrylverbindungen, Vinylacetat, Polyvinyl-Butyral, Polyurethan oder dergleichen. Das erfindungsgemäße Element 1 kann weiterhin als Isolierglasscheibe aufgebaut sein, wie dies in der Figur 2 dargestellt ist. In diesem Falle ist die Verbundglasscheibe 4 zur Außenseite hin gerichtet und über Abstandhalter bzw. Randdichtungen 7, wie aus Silikon, auf Abstand mit einer weiteren Innenscheibe 8 versehen. Es können auch Dreifach-Isolierglasscheiben vorgesehen sein.

In eine der organischen Verbindungsschichten 6, 6a, vorzugsweise die äußere organische Zwischenschicht 6, sind bei der Herstellung der Isolierglasscheibe 4 aus den Einzelscheiben 2, 3 Halteelemente 11, 12 in Form von einzelnen Halteplatten 11 bzw. einem durchgehenden Haltelochband 12 mit ihren plattenförmigen Abschnitten 13 eingelegt, wobei die Halteelemente 11, 12 mit Befestigungsabschnitten 14 an den Stirnseiten der Verbundplatte 4 diese überragen. Im überragenden Bereich können die Halteelemente 11, 12, müssen aber nicht ebenfalls plattenförmig ausgebildet sein; sie können hier auch am Rand oder Profil Form aufweisen. Wenn die Halteelemente vollständig aus Flachmaterial, wie eben Lochblech, hergestellt sind, so sind die Befestigungsabschnitte 14 vorzugsweise aus der Ebene der Verbundscheibe 4 nach hinten bzw. innen, bei der Isolierglasscheibe also in Richtung auf die innen liegende Glasscheibe 8 hin mittels entsprechenden Techniken und Werkzeuge abgebogen, wie dies in der Figur 2 dargestellt ist.

Die Halteelemente 11, 12 können auch in andersartiger Weise ausgebildet sein, beispielsweise an ihrer Außenseite mit Haken oder anderen Befestigungsausbildungen. Wesentlich ist lediglich, daß der zwischen die Scheiben 2, 3 in die Verbindungsschicht 6 ragende Abschnitt aus Flachmaterial besteht und die Halteelemente, insbesondere in ihrem überragenden Bereich eigensteif und zugund scherfest ausgebildet sind, wobei sie vorzugsweise auch biegefest sind, d.h. durch beim Einsatzort auf sie einwirkende auch starke Kräfte nicht verformt werden, sondern vor Einbau der Fassadenelemente und insbesondere vor ihrem Einsetzen gegebenenfalls nur mittels herkömmlicher Formtechniken unter Einsatz entsprechendem Werkzeugs geformt werden können. Der Befestigungsabschnitt 14 könnte auch aus mit dem Flachmaterial einstückig ausgebildeten oder verbundenen Rundmaterial bestehen oder eine vorgeformte räumliche Kontur aufweisen.

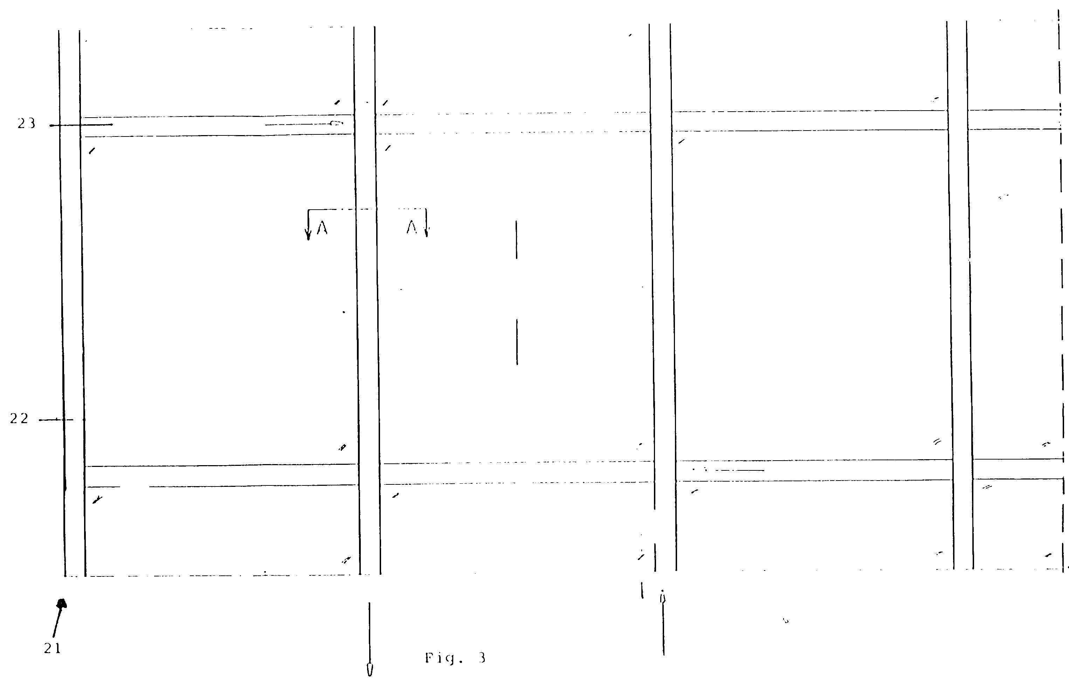

Figur 3 zeigt eine erfindungsgemäße Glaskonstruktion 21 in Form einer Glasfassade. Die Glasfassade weist senkrechte Pfosten 22 und horizontal verlaufende Riegel 23 auf. Mit den Pfosten 22 und den Riegeln 23 sind die erfindungsgemäßen Isolierglas-Elemente, wie sie vorstehend beschrieben wurden, in der weiter unten erläuterten Weise verbunden und bilden derart selbst als konstruktives Element eine Aussteifung des Gerüsts aus Pfosten 22 und Riegeln 23, insbesondere gegen in der Ebene der Fassade wirkende Schub- oder Scherkräfte, seien dies zug- oder druckausübende Kräfte. Die Seiten 1 steifen damit die Rahmenkonstruktion 22, 23 aus und bilden so selbst ein statisch tragendes Element der gesamten Fassade.

Ein Pfosten 22 und auch ein Riegel 23 ist als Profilträger 24 ausgebildet, beispielsweise in Form des dargestellten Kastenprofils; es kommen auch andere Profile in Frage. Als Material für den Profilträger 24 (Pfosten 22 bzw. Riegel 23) eignet sich je nach Größe der gesamten Konstruktion von den sonstigen Anforderungen Aluminium oder auch Stahl.

Eine Seitenfläche des Trägers 24 dient als Anlageseite 26 für die Isolierscheiben-Elemente 1. Die Anlageseite 26 ist mit einem Dichtungselement 27 versehen, das eine Klebschicht, vorzugsweise eine elastische Klebschicht, sein kann. In diesem Falle ist die Einzelscheibe 8 (Innenscheibe) in ihrem Randbereich 28 mit dem Profilträger 24 verklebt. An der Stirnseite 5 der Isolierglaseinheit 1 ragen die zwischen den Einzelscheiben 2, 3 der Verbundglasscheibe 4 eingelagerten Halteelemente 11 heraus. Diese sind mit Abstand zur Stirnseite 5 aus ihrer senkrechten Erstreckungsrichtung zu dieser parallel zur Stirnseite 5 der Glaseinheit 1 abgebogen und zwar in Richtung auf den Profilträger 24 zu. Im dargestellten Ausführungsbeispiel sind die Haltelemente 11 vor dem Profilträger 24 im wesentlichen in der Ebene der Dichtung 27 wiederum senkrecht zur Stirnseite 5 der Glaseinheit 1 hin abgebogen, also parallel zur Anlageseite 26 des Profilträgers 24. Die entsprechenden Endbereich 29 der Halteelemente 11 der beiden an ihren Stirnseiten 5 einander gegenüberliegend und fluchtend angeordneten Isolierglasscheiben-einheiten 1 überlappen einander. Weiterhin sind durch sie hindurch und in die Anlage 26 des Profilträgers 24 Schrauben 31, vorzugsweise selbstschneidende Schrauben, eingeschraubt, so daß der Profilträger 24 bzw. genauer seine Anlagewandung 26 lediglich mit entsprechenden Bohrungen versehen sein muß, in die die Schrauben 31 durch die Endbereiche 29 der Halteelemente 11 hindurch eingeschraubt sind.

Durch die eigensteife Ausbildung der Halteelemente 11 und die Abmessung der abgebogenen Abschnitte desselben werden die Glaselemente 1 fest gegen die Dichtungen 27 gedrückt. Die Glaselemente 1 sind über ihre gesamte Höhe an mehreren Stellen mittels derartiger Schrauben 31 am Pfosten 22 bildenden Profilträgern 24 festgelegt. In gleicher Weise sind sie über ihre Breite an entsprechenden Riegeln 23 bildenden Profilträgern 24 befestigt. Es hat sich herausgestellt, daß durch diese Konstruktion und Ausgestaltung eine hohe Aussteifung der gesamten Fassade erzielt wird und dabei insbesondere die Glaselemente 1 selbst als stabilisierende Teile, insbesondere gegen Zug- und Druck-Schubspannungen mitwirken.

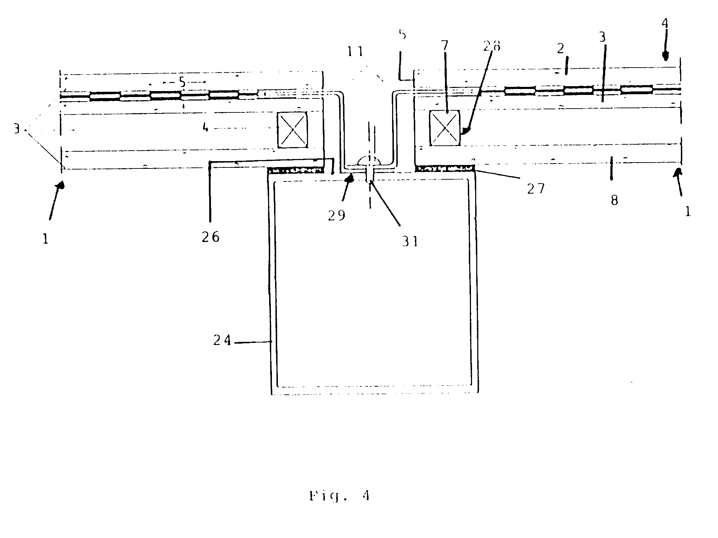

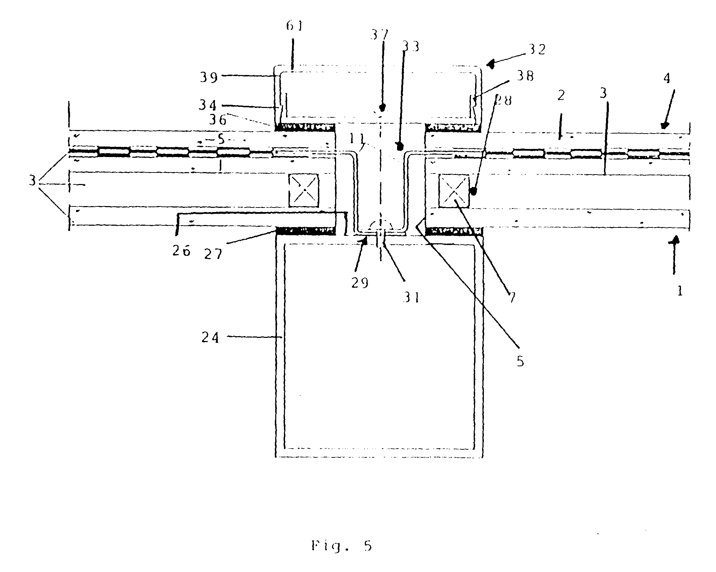

Die Ausgestaltung der Figur 5 entspricht im wesentlichen der der Figur 4. Zusätzlich ist hier zunächst eine Abdeckung 32 vorgesehen, mit der der Zwischenraum 33 zwischen den Stirnseiten 5 der Glaseinheiten 1 - in den sich die die Glaseinheiten 1 überragenden Abschnitte der Halteelemente 11 befinden, über- und abgedeckt. Die Abdeckung 32 weist ein Unterteil 34 auf, das unter Zwischenlage ebenfalls einer Dichtung eines Dichtungsbandes auf den seitlichen Randbereich der äußeren Einzelscheibe 2 der Verbundglasscheibe 4 aufgesetzt ist und mittels Schrauben 37 ebenfalls durch die Abschnitte 29 der Halteteile 11 hindurch an der Anlagewandung 26 des Profilträgers 24 festgelegt und gegen diese Wandung verspannt ist. In diesem Falle kann auch die Dichtung 27 aus einem Dichtungsband, das nicht notwendigerweise beidseitig als Klebeband ausgebildet ist, bestehen. Das Unterteil 34 weist senkrecht von den Scheibeneinheiten 2 nach außen fortstehende Ansätze 38 mit Hinterschneidugnen auf, in welche Nasen 39 eines Oberteils 41 der Abdeckung 32 einschnappen können, so daß auch die Köpfe der Schrauben 37 abgedeckt und damit gegen Witterungseinflüsse geschützt sind.

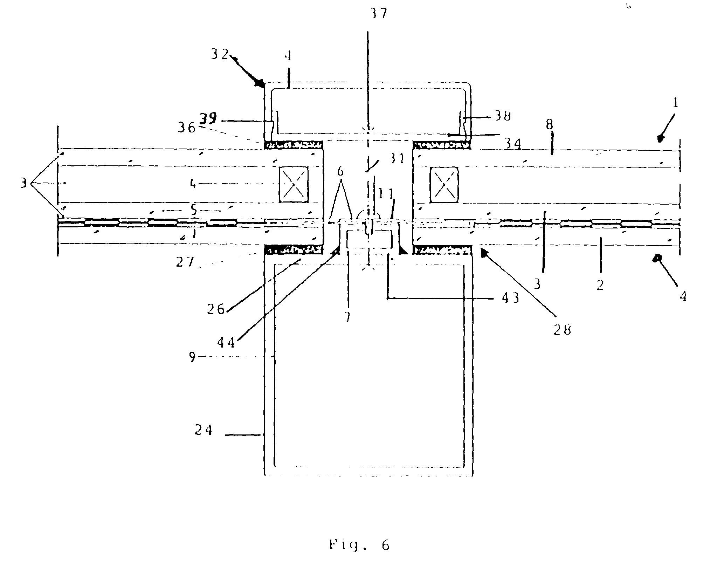

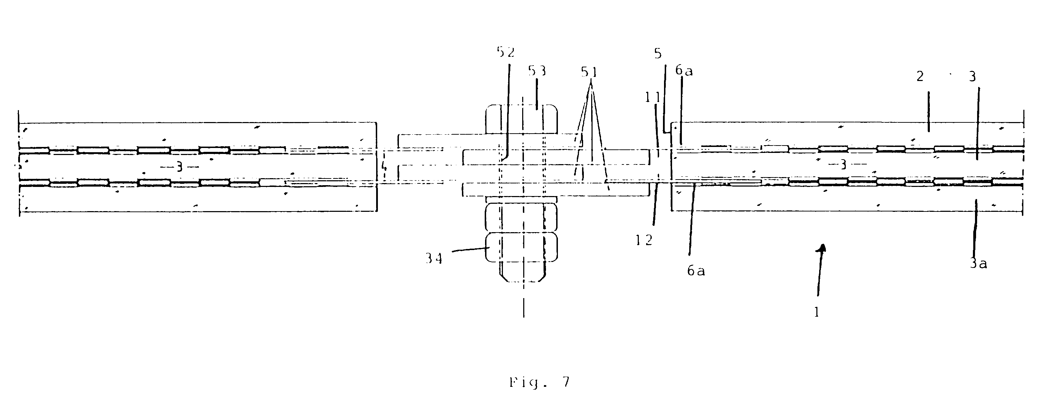

Die Figur 6 zeigt eine erfindungsgemäße Konstruktion für eine Dachverglasung. Während bei der Ausgestaltung der Figuren 4 und 5 die Verbundglasscheibe 4 zur Außenseite hin gerichtet ist, damit bei Beschädigung von außen liegendem Glas dieses an der Folie der Verbundglasscheibe haften bleibt und nicht von der Fassade abfällt, ist bei der Dachverglasung der Figur 6 die Verbundglasscheibe aus dem gleichen Grund auf der Unterseite angeordnet. Der Profilträger 24 dient hier beispielsweise als Sparren. Auf seiner oberen Anlageseite 28 ist bei dieser Ausgestaltung ein weiteres Kastenprofil 43 aufgebracht und fest verbunden, wie beispielsweise verschweißt oder gelötet oder auch mit dem Profilträger 24 mittels der Schrauben 31 verschraubt. Die Glaseinheit 1 liegt mit ihrem Randbereich 28 auf der Anlageseite 26 vorgesehenen Dichtungen 27 auf. Auf ihrer Ober- bzw. Außenseite (auf der Einzelscheibe 8) sind im Randbereich 28 wiederum Dichtungsbänder 36 vorgesehen, auf denen keine der Abdeckung 32 entsprechende Abdeckung in der vorstehend beschriebenen Weise aufgebracht ist.

Die Kastenprofile 43 dienen als Abstandhalter zwischen der Ebene der Anlagefläche 26 des Profilträgers 34 und der senkrecht aus den Stirnseiten 5 der Glaseinheiten 1 zwischen den beiden die Verbundglasscheibe 4 bildenden Einzelglasscheiben 2, 3 ausbildenden Halteelementen 11, die auf der dem Profilträger 24 abgewandten Oberseite des Kastenprofils 43 einander überlappend aufliegen und dort mittels Schrauben 31 festgelegt sind, die vorzugsweise wiederum selbstschneidende Schrauben sind und gegebenenfalls durch den gesamten Profilkasten 43 hindurch bis in entsprechende Bohrungen des Trägerprofils 34 ragen, so daß sie gleichzeitig im Profilkasten 43 am Trägerprofil 24 festliegen, wenn dieses nicht mit Verschweißungen oder Lötungen 44 festgelegt ist.

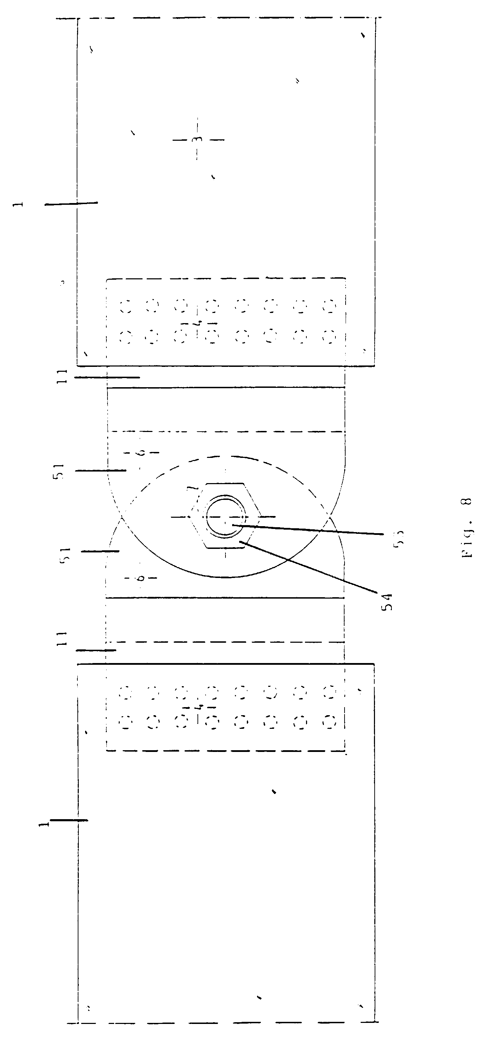

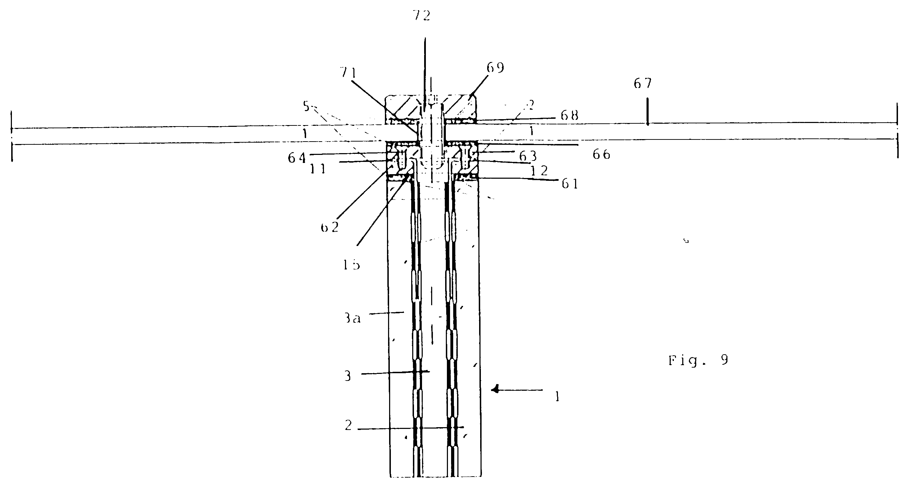

Eine weitere Einsatzmöglichkeit eines erfindungsgemäßen Glaselements und damit eine weitere konkrete Ausgestaltung der erfindungsgemäßen Glaskonstruktion ist den Figuren 7 und 8 zu entnehmen. Die Glaselemente 1 sind hier selbst als Träger, nämlich als Verbundglasträger aus miteinander verbundenen Einzelscheiben 2, 3, 3a gebildet und weisen einen rechteckigen Querschnitt auf. In beide Zwischenschichten 6, 6a sind die entsprechenden Halteelemente 11, 12 eingelegt und überragen das Glaselement an seiner Stirnseite 5 senkrecht zur Fläche der Stirnseite 5. Im dargestellten Ausführungsbeispiel sind die Halteelemente 11, 12 jeweils mit einem Gelenkteil 51 verbunden, das beispielsweise seitlich an jedem Halteelement 11, 12 angeschweißt ist. Die Gelenkteile 51 weisen miteinander fluchtende Durchbrüche 52 auf, durch die ein Gelenkbolzen 53 hindurchgesteckt ist, der durch Sicherungsmuttern 54 festgelegt ist. Die an Halteteilen 11, 12 eines Glaselements 1 befestigten Gelenkteile 51 sind an der gleichen Seite derselben befestigt, wobei die aus unterschiedlichen miteinander zu verbindenden Glaselementen befestigten Gelenkteile 51 gegeneinander gerichtet sind, wie dies in Figur 7 zu entnehmen ist. Die Stärke eines Gelenkteils 51 entspricht daher hier gerade dem halben Abstand der beiden benachbarten Halteelemente 11, 12 eines Glaselements 1, so daß zwei Gelenkteile 51 gerade den Abstand zwischen den Halteelementen 11, 12 ausgleichen, so daß diese bei Befestigung mittels des Gelenkbolzens 53 keiner Verbiegung ausgesetzt sind. Gegebenenfalls könnten die Halteelemente 11, 12 auch gleich als mit dem Durchbruch 52 versehene Gelenkteile 51 ausgebildet sein. In diesem Falle müßten zwischen den Laschen 11, 12 auf den Gelenkbolzen 53 Unterlichtscheiben oder Ringe als Abstandhalter zwischen den Halteelementen 11, 12 vorgesehen sein. Derartige Glaselemente können beispielsweise bei Glaskonstruktionen wie Wintergärten oder dergleichen als tragende Elemente eingesetzt werden, wobei der Winkel bei der dargestellten Gelenkausgestaltung beispielsweise beim übergang von einem senkrechten Träger zu einem als Dachsparren dienenden Träger und zwischen zwei als Dachsparren dienenden Trägern, die damit die Tragkonstruktion für ein Satteldach bilden, weitgehend beliebig gewählt werden kann. Auch können derartige Glasträger in Umgebungen eingesetzt werden, in denen herkömmliche Stahlträger nicht eingesetzt werden können.

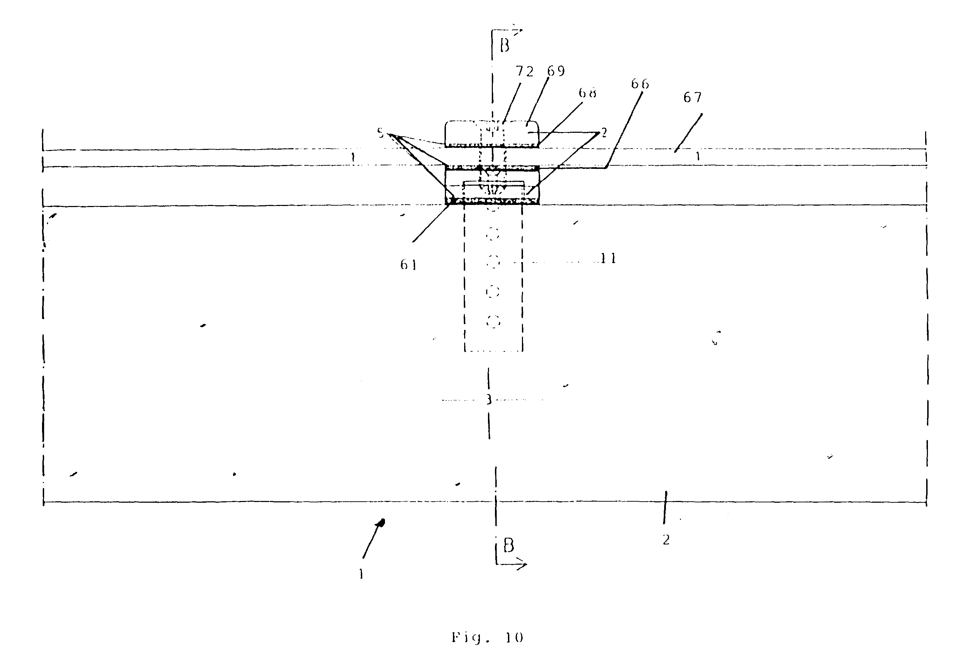

Die Figuren 9 und 10 zeigen eine weitere Einsatzmöglichkeit des erfindungsgemäßen Glaselements in Form eines Glasträgers und damit eine weitere erfindungsgemäße Glaskonstruktion.

Das Glaselement 1 als solches ist in der gleichen Weise ausgebildet wie das Glaselement der Figuren 7 und 8. Auf den Stirnseiten 5 der äußeren Glasscheiben 2, 3a sind Dichtungen in Form von elastischen Dichtungsbändern 61 aufgebracht. Mit Abstand zu diesen sind die Haltelemente 11, 12 jeweils nach außen abgebogen. Zwischen den abgebogenen Bereichen der Halteelemente 11, 12 und den Dichtungen 61 sind Metallelemente 62 angeordnet. Auf der diesen Metallelementen 62 abgewandten Seite der abgebogenen Abschnitte der Halteelemente 11, 12 ist ebenfalls ein Metallteil 63 (die Metallteile bestehen aus Stahl oder Alu) aufgelegt, welches durch Durchbrüche der Halteelemente 11, 12 hindurch mittels Schrauben 64, die in die Teile 62 eingeschraubt sind und dort ihr Widerlager finden, befestigt sind. Auf den Metallteilen 63 ist unter Zwischenlage ebenfalls eine Dichtung 66, eine Abdeckung 1, die beispielsweise eine Glasscheibe 67, wie eine Einzeloder Verbundglasscheibe sein kann oder aber auch aus anderem geeigneten Material besteht, aufgelegt. Auf ihrer vom Glaselement 1 nach außen hin gerichteten Seite befindet sich im Befestigungsbereich eine weitere Abdichtung 68, auf der eine Andrückplatte 69 aufgelegt ist, die durch einen Durchbruch 71 der Platte 67 hindurch mittels eines Schraubbolzens 72 in ein Schraubgewinde des Elements 63 festgeschraubt ist. Während Druckkräfte senkrecht auf die Abdeckung 69 und die Platte 67 durch die zwischengelegten Teile direkt auf das als Träger ausgebildete Glaselement 1 übertragen werden, werden Zug- und Scher- bzw. Schubkräfte in die eigenstabilen schub- und zugfesten Halteelemente 11, 12 eingeleitet (die zwischen den Metallteilen 62, 63 eingespannt sind) und von diesen bzw. über diese ebenfalls durch die Glasträger-Elemente 1 aufgenommen.

Insgesamt bietet die Erfindung vielfältige Ausgestaltungen für Glaskonstruktionen und das erfindungsgemäße Glaselement weist unterschiedliche Einsatzmöglichkeiten als tragendes bzw. statisch stabilisierendes, wie auch aussteifendes Element von Konstruktionen, wie Metall-, aber auch Holzkonstruktionen.

## Patentansprüche

1. Element für eine Glaskonstruktion, wie Glasfassade, -Dach oder dergleichen, mit mindestens einer aus wenigstens zwei Einzelscheiben (2, 3) bestehenden Verbundglasscheibe, mit einer organischen Verbindungsschicht (6) zwischen jeweils zwei Einzelscheiben (2, 3), und mit in die Verbindungsschicht (6) zwischen Einzelscheiben (2, 3) eingelegte und über diese stirnseitig herausgeführte eigensteife, zug- und scherfeste Halteelemente (11, 12), die zumindestens flache plattenförmige Bereiche (13) aus Flachmaterial aufweisen, mit denen sie in Randbereichen der Verbundglasscheibe (4) in die Verbindungsschicht (6) zwischen zwei Einzelscheiben (2, 3) eingelegt sind, dadurch gekennzeichnet, daß die Halteelemente (11, 12) zumindestens in ihrem in der Verbindungsschicht (6) eingebetteten Bereich (13) lochblechartig mit Durchbrüchen (15) versehen sind und daß die ausgehärtete Verbindungsschicht (6) durch die Durchbrüche (15) hindurch eine formschlüssige Verbindung mit den Halteelementen (11, 12) bildet.

2. Element nach Anspruch 1, dadurch gekennzeichnet, daß die Halteelemente (11, 12) in ihrem nach außen ragenden Befestigungsabschnitt (14) mit Durchbrüchen (15) zur Befestigung des Elements (1) versehen sind.

3. Element nach Anspruch 1 oder 2, dadurch gekennzeichnet, daß die Halteelemente (11, 12) aus Metall, wie Edelstahl, Messing oder Kupferlegierung, bestehen.

4. Element nach Anspruch 1 oder 2, dadurch gekennzeichnet, daß die Halteelemente aus Kunststoff bestehen.

5. Element nach einem der vorangehenden Ansprüche, dadurch gekennzeichnet, daß die Halteelemente (11, 12) vollständig aus Flachmaterial bestehen.

6. Element nach einem der vorangehenden Ansprüche, dadurch gekennzeichnet, daß es einen Isolierglasscheibenaufbau aufweist.

7. Element nach Anspruch 6, dadurch gekennzeichnet, daß die Halteelemente in nach außen zu richtenden Verbundglasscheiben (4) der Isolierglaskonstruktion eingelagert sind.

8. Element nach einem der vorangehenden Ansprüche, dadurch gekennzeichnet, daß die Halteelemente (11, 12) mit einer endlichen Länge senkrecht zu Stirnseiten der Verbundglasscheibe (4) aus dieser herausragen.

9. Glaskonstruktion mit Trägerelementen und an diesen befestigen Verbundglasscheiben (2, 3, 3a), die mit einem Randbereich an einer Anlageseite (26) der Trägerelemente (24) vor diese gesetzt sind, wobei zwischen zwei Einzelscheiben (2, 3) der Verbundglasscheibe in einer organischen Verbindungsschicht (6) festgelegte eigensteife, zug- und scherfeste Halteelemente (11, 12), die aus der Stirnseite (5) der Verbundglasscheibe herausragen, zumindestens mit einem Endabschnitt (29) senkrecht zur entsprechenden Stirnseite (5) der Verbundglasscheibe und parallel zur Anlageseite (26) der Trägerelemente (24) geführt sind und am Trägerelement (24) befestigt sind, dadurch gekennzeichnet, daß die Halteelemente (11, 12) zumindestens in ihrem in der Verbindungsschicht (6) eingebetteten Bereich (13) lochblechartig mit Durchbrüchen (15) versehen sind und daß die ausgehärtete Verbindungsschicht (6) durch die Durchbrüche (15) hindurch eine formschlüssige Verbindung mit den Halteelementen (11, 12) bildet.

10. Konstruktion nach Anspruch 9, dadurch gekennzeichnet, daß die Trägerelemente (24) Profilträger sind.

11. Konstruktion nach Anspruch 9, dadurch gekennzeichnet, daß die Trägerelemente Verbundglasträger sind.

12. Konstruktion nach einem der Ansprüche 9 bis 11, dadurch gekennzeichnet, daß die Endabschnitte der Halteelemente (11, 12) einen seitlichen Versatz zu ihrer Austrittsstelle aus der Verbundglasscheibe (2, 3a) aufweisen, die im wesentlichen im Abstand der Austrittsstelle zu der den Trägerelementen zugewandten Seitenfläche der Verbundglasscheiben entspricht.

13. Konstruktion nach einem der Ansprüche 9 bis 12, dadurch gekennzeichnet, daß zwischen dem Rand der Verbundglaseinheit (2, 3, 3a) und dem Trägerelement (24) ein Dichtungsband (27) angeordnet ist und das Verbundglaselement und das Trägerelement unter Zwischenlage des Dichtungsbandes durch die Halteelemente (11, 12) gegeneinander verspannt sind.

14. Konstruktion nach einem der Ansprüche 9 bis 13, dadurch gekennzeichnet, daß die Halteelemente (11, 12) mit Abstand zur Stirnseite des Verbundglaselements senkrecht zu dieser abgewinkelt sind.

15. Konstruktion nach einem der Ansprüche 9 bis 14, dadurch gekennzeichnet, daß die Verbundglasscheiben an ihren Randbereichen mit dem Trägerelement verklebt sind.

16. Konstruktion nach einem der Ansprüche 9 bis 15, dadurch gekennzeichnet, daß die Verbundglasscheiben über ihre Halteelemente (11) mittels Schrauben am Trägerelement befestigt sind.

17. Konstruktion nach Anspruch 16, dadurch gekennzeichnet, daß die Schrauben (31) selbstschneidende Schrauben sind.

## Claims

1. Element for a glass construction, as in glass facade, glass roof or similar, with at least one set of composite glass panes comprising at least two individual panes (2, 3), with an organic connecting layer (6) between each of two individual panes (2, 3), and with rigid, stress and shear resistant holding elements (11, 12) inserted in the connecting layer (6) between the individual panes (2, 3) and extending beyond said connecting layer (6) in the front, wherein the holding elements, having at least flat platelike areas (13) out of flat material, are placed in the connecting layer (6) between two individual panes (2, 3) at the frame area of the composite glass panes (4), characterized in that the holding elements (11, 12) are provided with perforated platelike openings (15) at least in their embedded area (13) in the connecting layer (6) and that the hardened connecting layer (6) forms an interlocking connection with the holding elements (11, 12) through the openings (15).

2. Element according to claim 1, characterized in that the holding elements (11, 12) are provided with connection segment (14) that protudes outwards from them with openings (15) for the joining of the element (1).

3. Element according to claim 1 or 2, characterized in that the holding elements (11, 12) consist of metal, as in stainless steel, brass or copper base alloy.

4. Element according to claim 1 or 2, characterized in that the holding elements consist of synthetic material.

5. Element according to any of the above claims, characterized in that the holding elements (11, 12) consist of entirely flat material.

6. Element according to any of the above claims, characterized in that it shows a construction of insulated glass panes.

7. Element according to claim 6, characterized in that the holding elements in the insulated glass construction are maintained through the outwards oriented composite glass panes (4).

8. Element according to any of the above claims, characterized in that the holding elements (11, 12) with a finite length protrude out of the composite glass panes (4) perpendicular to the front of the said panes.

9. Glass construction with supporting elements and thereon fastened composite glass panes (2, 3, 3a), which are placed in front of the supporting elements on an arrangement side (26) of the supporting elements (24) at a frame area, wherein rigid, stress and shear resistant holding elements (11, 12), placed in an organic connecting layer (6) between two individual panes (2, 3) of the composite glass panes, protrude out of the front side (5) of the composite glass panes and are perpendicular, at least with one end section (29), to the corresponding front side (5) of the composite glass panes and parallel to the arrangement side (26) of the supporting elements (24), and are fastened on the supporting elements (24), characterized in that the holding elements (11, 12) are provided with perforated platelike openings (15) at least in their embedded area (13) in the connecting layer (6) and that the hardened connecting layer (6) forms an interlocking connection with the holding elements (11, 12) through the openings (15).

10. Construction according to claim 9, characterized in that the supporting elements (24) are beams.

11. Construction according to claim 9, characterized in that the supporting elements (24) are composite glass beams.

12. Construction according to any of the above claims 9 to 11, characterized in that the end sections of the holding elements (11, 12) are staggered laterally at their exit location from the composite glass panes (2, 3a), which essentially in the distance from the exit location corresponds to the side surface of the composite glass panes facing the supporting elements.

13. Construction according to any of the above claims 9 to 12, characterized in that a sealing band (27) is arranged between the frame of the composite glass panes (2, 3, 3a) and the supporting element (24), and the composite glass element and the supporting element are braced against each other through the holding elements (11, 12).

14. Construction according to any of the above claims 9 to 13, characterized in that the holding elements (11, 12) are perpendicularly bent to the front of the composite glass element and are situated at a distance therefrom.

15. Construction according to any of the above claims 9 to 14, characterized in that the composite glass panes are affixed to the supporting element in their frame area.

16. Construction according to any of the above claims 9 to 15, characterized in that the composite glass panes are fastened on the supporting element by their holding elements (11) through means of screws.

17. Construction according to claim 16, characterized in that the screws (31) are themselves cutting screws.

## Revendications

1. Composant pour construction en verre telle qu'une façade ou un toit en verre ou analogue, comprenant au moins une vitre en verre feuilleté composée d'au moins deux panneaux individuels (2,3), une couche de liaison (6) organique entre chacun des deux panneaux (2,3) et des supports de maintien (11,12) résistants à la traction et au cisaillement, à stabilité propre, insérés dans la couche de liaison entre les plaques de verre individuelles (2,3) et sortant de celle-ci par leur chant, présentant au moins des zones (13) planes en forme de plaques réalisées en matériaux planaires, par lesquelles ils sont insérés dans la couche de liaison (6) au niveau des zones périphériques de la vitre en verre feuilleté (4), caractérisé en ce que les supports de maintien (11,12) présentent au moins dans leur partie (13) insérée dans la couche de liaison (6) des perçages à la manière d'une tôle perforée et en ce que la couche de liaison (6) durcie constitue à travers les perçages (15) une liaison à ajustement avec les supports de maintien (11,12).

2. Composant selon la revendication 1, caractérisé en ce que les supports de maintien (11,12) présentent dans leur zone de fixation (14) faisant saillie vers l'extérieur des perçages (15) pour la fixation du composant (1).

3. Composant selon l'une des revendications 1 ou 2, caractérisé en ce que les supports de maintien (11,12) sont en métal tel que l'acier inoxydable, le laiton ou un alliage cuivreux.

4. Composant selon l'une des revendications 1 ou 2, caractérisé en ce que les supports de maintien sont en matière synthétique.

5. Composant selon l'une quelconque des revendications précédentes, caractérisé en ce que les supports de maintien (11,12) sont constitués entièrement en matériaux planaires.

6. Composant selon l'une quelconque des revendications précédentes, caractérisé en ce qu'il comporte une vitre isolante.

7. Composant selon la revendication 6, caractérisé en ce que les supports de maintien sont logés dans des vitres en verre feuilleté à diriger vers l'extérieur de la construction en verre isolant.

8. Composant selon l'une quelconque des revendications précédentes, caractérisé en ce que les supports de maintien (11,12) font saillie d'une longueur donnée hors de la vitre en verre feuilleté (4) perpendiculairement aux faces frontales de celle-ci.

9. Construction en verre comportant des éléments porteurs et des vitres en verre feuilleté (2,3,3a) fixées à ceux-ci, ces vitres étant disposées devant les éléments porteurs (24) au niveau d'une zone périphérique d'une face d'appui (26) de ceux-ci, construction dans laquelle des supports de maintien (11,12) résistants à la traction et au cisaillement, à stabilité propre, insérés dans la couche de liaison (5) organique entre deux panneaux individuels (2,3) de la vitre en verre feuilleté, et en saillie de la face frontale (5) de la vitre en verre feuilleté, sont guidés au moins par une zone terminale (29) perpendiculairement à la face frontale (5) correspondante de la vitre en verre feuilleté et parallèlement à la face d'appui (26) des éléments porteurs (24) et fixés à l'élément porteur (24), caractérisée en ce que les supports de maintien (11,12) présentent au moins dans leur partie (13) insérée dans la couche de liaison (6) des perçages à la manière d'une tôle perforée, et en ce que la couche de liaison (6) durcie constitue à travers les perçages (15) une liaison à ajustement avec les supports de maintien (11,12).

10. Construction selon la revendication 9, caractérisée en ce que les éléments porteurs (24) sont des supports profilés.

11. Construction selon la revendication 9, caractérisée en ce que les éléments porteurs sont des supports en verre feuilleté.

12. Construction selon l'une quelconque des revendications de 9 à 11, caractérisée en ce que les portions terminales des supports de maintien (11,12) présentent un décalage latéral par rapport à l'endroit de sortie de la vitre en verre feuilleté (2,3a) correspondant sensiblement à la distance entre la zone de sortie par rapport à la surface latérale des vitres en verre feuilleté en regard des éléments porteurs.

13. Construction selon l'une quelconque des revendications 9 à 12, caractérisée en ce qu'une bande d'étanchéité (27) est disposée entre le bord de l'unité en verre feuilleté (2,3,3a) et l'élément porteur (24) et en ce que le composant en verre feuilleté et l'élément porteur sont forcés l'un vers l'autre par les supports de maintien (11,12) par l'interposition de la bande d'étanchéité.

14. Construction selon l'une quelconque des revendications 9 à 13, caractérisée en ce que les supports de maintien (11,12) sont pliés perpendiculairement à la face frontale du composant en verre feuilleté et à distance de celle-ci.

15. Construction selon l'une quelconque des revendications 9 à 14, caractérisée en ce que les vitres en verre feuilleté sont collées dans leurs zones de bordure aux éléments porteurs.

16. Construction selon l'une quelconque des revendications 9 à 15, caractérisée en ce que les vitres en verre feuilleté sont fixées par l'intermédiaire de leurs supports de maintien (11) au moyen de vis à l'élément porteur.

17. Construction selon la revendication 16, caractérisée en ce que les vis (31) sont des vis autotaraudeuses.
